(19)

Europäisches
Patentamt
European
Patent Office
Office européen
des brevets

(11) **EP 3 637 084 A1**

(12) **EUROPEAN PATENT APPLICATION**
published in accordance with Art. 153(4) EPC

(43) Date of publication:
**15.04.2020 Bulletin 2020/16**

(21) Application number: **18821354.0**

(22) Date of filing: **11.06.2018**

(51) Int Cl.:
*G01M 17/02* (2006.01)      *B60C 19/00* (2006.01)
*G01M 1/16* (2006.01)

(86) International application number:
**PCT/JP2018/022189**

(87) International publication number:
**WO 2018/235647 (27.12.2018 Gazette 2018/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2017 JP 2017121670**

(71) Applicant: **Kabushiki Kaisha Kobe Seiko Sho
(Kobe Steel, Ltd.)
Kobe-shi, Hyogo 651-8585 (JP)**

(72) Inventor: **MIZUTA, Yuichiro
Takasago-shi,
Hyogo 676-8670 (JP)**

(74) Representative: **TBK
Bavariaring 4-6
80336 München (DE)**

(54) **TIRE DYNAMIC LOAD RADIUS CALCULATING DEVICE AND CALCULATING METHOD**

(57)     A tire dynamic load radius calculating device (1) includes a tire rotation sensor (2s), a drum rotation sensor (3s), a drum rotation angle calculating unit (c1), and a tire dynamic load radius calculating unit (c2). The drum rotation angle calculating unit (c1) is configured to calculate a rotation angle of a drum (3) per one rotation of a tire based on signals from the sensors (2s, 3s). The tire dynamic load radius calculating unit (c2) is configured to calculate a dynamic load radius of the tire (2) based on a formula ($R = L/2\pi$), using the rotation angle calculated by the drum rotation angle calculating unit (c1). In this formula, R represents a dynamic load radius of the tire, and L represents a distance traveled by the tire per one rotation of the tire.

FIG. 4

EP 3 637 084 A1

## Description

## Technical Field

The present invention relates to a tire dynamic load radius calculating device and a tire dynamic load radius calculating method.

## Background Art

One of crucial evaluation items related to performance of a tire used in a vehicle (truck, owner-driven car, etc.) is a tire dynamic load radius. The tire dynamic load radius represents a radius of a tire when a load is applied to the tire. For example, Patent Literature 1 discloses causing a tire to rotate while applying a load to the tire by pressing the tire to a drum being rotated, and measuring an amount of displacement of the tire by a potentiometer to calculate a tire dynamic load radius from the amount of displacement of the tire.

However, a tire dynamic load radius should be originally calculated from a formula (1) below, and in a case where a tire dynamic load radius is calculated from the amount of tire displacement as in Patent Literature 1, a calculated value may have reduced precision.

$$R = L/2\pi \ ... \ (1)$$

(Here, R represents a tire dynamic load radius and L represents a distance traveled by a tire per one rotation of the tire.)

## Citation List

## Patent Literature

Patent Literature 1: JP H05-034233 A

## Summary of Invention

An object of the present invention is to provide a tire dynamic load radius calculating device and a tire dynamic load radius calculating method, which enable calculation of a tire dynamic load radius with high precision.

A tire dynamic load radius calculating device according to the present invention includes a drum shaft; a drum having an outer circumferential surface which simulates a road surface on which a tire travels, and being rotatable around the drum shaft; a tire shaft for supporting the tire; a rotation mechanism configured to cause at least one of the tire and the drum to rotate, with the tire shaft and the drum shaft being arranged in parallel to each other and a tread of the tire and the outer circumferential surface being in contact with each other; a tire rotation sensor for detecting rotation of the tire; a drum rotation sensor for detecting rotation of the drum; a drum rotation angle calculating unit configured to calculate a rotation angle of the drum per one rotation of the tire based on signals from the tire rotation sensor and the drum rotation sensor; and a tire dynamic load radius calculating unit configured to calculate a dynamic load radius of the tire based on a formula (1) below, using the rotation angle of the drum calculated by the drum rotation angle calculating unit.

$$R = L/2\pi \ ... \ (1)$$

(Here, R represents the dynamic load radius of the tire and L represents a distance traveled by the tire per one rotation of the tire.)

A tire dynamic load radius calculating method according to the present invention uses a tire dynamic load radius calculating device including: a drum shaft; a drum having an outer circumferential surface which simulates a road surface on which a tire travels, and being rotatable around the drum shaft; a tire shaft for supporting the tire; a rotation mechanism configured to cause at least one of the tire and the drum to rotate, with the tire shaft and the drum shaft being arranged in parallel to each other and a tread of the tire and the outer circumferential surface being in contact with each other; a tire rotation sensor for detecting rotation of the tire; and a drum rotation sensor for detecting rotation of the drum, the tire dynamic load radius calculating method including: a drum rotation angle calculating step of calculating a rotation angle of the drum per one rotation of the tire based on signals from the tire rotation sensor and the drum rotation sensor; and a tire dynamic load radius calculating step of calculating a dynamic load radius of the tire based on a formula (1) below, using the rotation angle of the drum calculated in the drum rotation angle calculating step.

$$R = L/2\pi \ ... \ (1)$$

(Here, R represents the dynamic load radius of the tire and L represents a distance traveled by the tire per one rotation of the tire.)

## Brief Description of Drawings

FIG. 1 is a plan view showing a tire dynamic load radius calculating device according to an embodiment of the present invention.
FIG. 2 is a side view showing the tire dynamic load radius calculating device according to the embodiment of the present invention.
FIG. 3 is a block diagram showing an electrical configuration of the tire dynamic load radius calculating device according to the embodiment of the present invention.

FIG. 4 is a flow chart showing a tire dynamic load radius calculating method according to the embodiment of the present invention.

**Description of Embodiments**

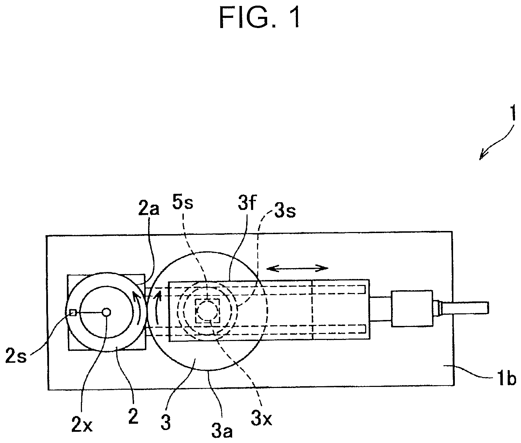

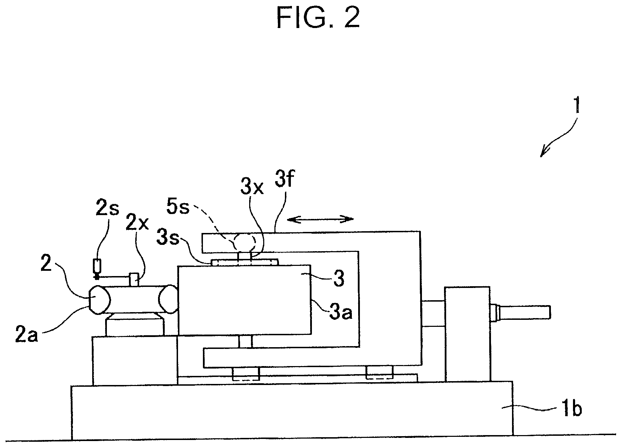

A tire dynamic load radius calculating device 1 (hereinafter, simply referred to as "calculating device") according to one embodiment of the present invention, which is applied to a tire uniformity machine (TUM) that conducts a tire uniformity test (JIS D4233) for testing uniformity of a tire in a circumferential direction, has a base 1b, a tire shaft 2x attached to the base 1b, a frame 3f supported on the base 1b, a drum shaft 3x supported by the frame 3f, and a drum 3 supported by the drum shaft 3x as shown in FIG. 1 and FIG. 2.

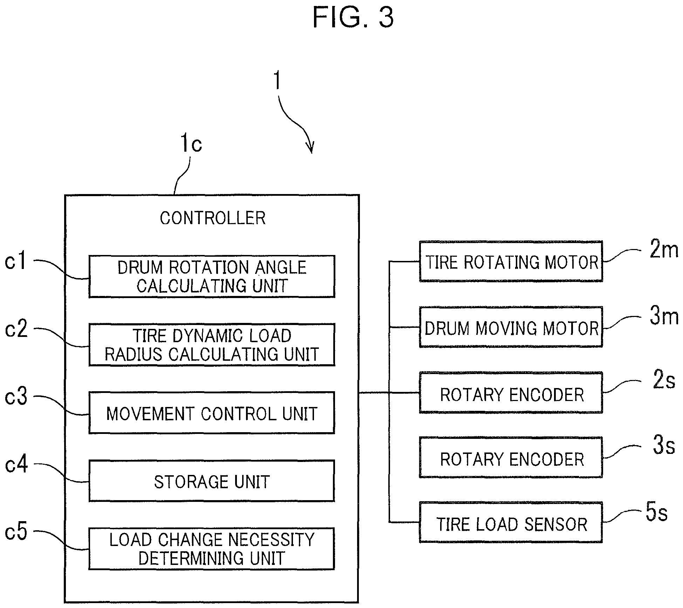

The calculating device 1 further has a controller 1c which controls operation of constituent members that configure the calculating device 1, a tire rotating motor 2m, a drum moving motor 3m, a rotary encoder 2s, a rotary encoder 3s, and a tire load sensor 5s as shown in FIG. 3.

The tire shaft 2x is supported on the base 1b so as to be rotatable around an axis along a vertical direction. The tire shaft 2x and a tire 2 supported by the tire shaft 2x rotate around the axis along the vertical direction with respect to the base 1b as a result of drive of the tire rotating motor 2m under control of the controller 1c. Specifically, the tire rotating motor 2m causes the tire 2 to rotate by application of rotating force to the tire shaft 2x.

The drum 3 has an outer circumferential surface 3a which simulates a road surface on which the tire 2 travels. The drum shaft 3x along the vertical direction is inserted through the center of the drum 3. The drum shaft 3x is supported by the frame 3f so as to be unrotatable, and the drum 3 is supported so as to be rotatable with respect to the drum shaft 3x. In other words, while the drum 3 rotates, the drum shaft 3x does not rotate.

The frame 3f as a supporting member supports the drum shaft 3x while preventing the drum shaft 3x from rotating around an axial center line of the drum shaft 3x with respect to the frame 3f. The frame 3f is supported on the base 1b so as to be movable in an approaching direction and a separating direction which are indicated by arrows in FIG. 1 and FIG. 2. The approaching direction is a direction in which the frame 3f approaches the tire 2, which is leftward in FIG. 1 and FIG. 2. The separating direction is a direction in which the frame 3f separates from the tire 2, which is rightward in FIG. 1 and FIG. 2. The frame 3f and the drum 3 supported by the frame 3f move with respect to the base 1b in the arrow directions shown in FIG. 1 and FIG. 2 as a result of drive of the drum moving motor 3m under control of the controller 1c.

The rotary encoder 2s detects a rotational speed of the tire 2 and sends a signal indicative of the rotational speed to the controller 1c to input the signal to the controller 1c. The rotary encoder 2s is attached to the tire shaft 2x as shown in FIG. 1 and FIG. 2.

The rotary encoder 3s detects a rotational speed of the drum 3 and sends a signal indicative of the rotational speed to the controller 1c to input the signal to the controller 1c. The rotary encoder 3s is ring-shaped and is attached on an upper surface of the drum 3 so as to surround a circumference of the drum shaft 3x as shown in FIG. 1 and FIG. 2. The rotary encoder 3s can be, for example, a magnetic rotary encoder, an optical rotary encoder (an encoder which measures a position by using light, such as an encoder using a ring-shaped or circular member with an optical scale engraved), or the like.

The tire load sensor 5s detects a load applied to the tire 2 in a state where a tread 2a of the tire 2 and the outer circumferential surface 3a of the drum 3 are in contact with each other, sends a signal indicative of the load to the controller 1c, and inputs the signal to the controller 1c. The tire load sensor 5s is attached to the drum shaft 3x to detect a load generated on the drum shaft 3x as shown in FIG. 1 and FIG. 2. The tire load sensor 5s is arranged, for example, between an upper end of the drum shaft 3x and the frame 3f.

The controller 1c, which is configured with, for example, a personal computer, includes CPU (Central Processing Unit) as an arithmetic processor, ROM (Read Only Memory), RAM (Random Access Memory), and the like. The ROM stores fixed data such as a program to be executed by the CPU. The RAM temporarily stores data necessary for the CPU to execute a program.

The controller 1c includes a drum rotation angle calculating unit c1, a tire dynamic load radius calculating unit c2, a movement control unit c3, a storage unit c4, and a load change necessity determining unit c5 as functions as shown in FIG. 3.

The drum rotation angle calculating unit c1 is configured to calculate a rotation angle of the drum 3 per one rotation of the tire 2 on the basis of signals from the rotary encoder 2s (one example of a tire rotation sensor) and the rotary encoder 3s (one example of a drum rotation sensor). The tire dynamic load radius calculating unit c2 is configured to calculate a dynamic load radius of the tire 2 based on a formula ($R = L/2n$) using a rotation angle of the drum 3 calculated by the drum rotation angle calculating unit c1. The movement control unit c3 is configured to adjust the load to be applied to the tire 2 by controlling the drum moving motor 3m (one example of a movement mechanism) on the basis of a signal from the tire load sensor 5s. The storage unit c4 is configured to store a plurality of values set in advance related to the load to be applied to the tire 2. In the present embodiment, the plurality of values includes a first value and a second value. The load change necessity determining unit c5 determines whether a load to be applied to the tire 2 needs to be changed or not.

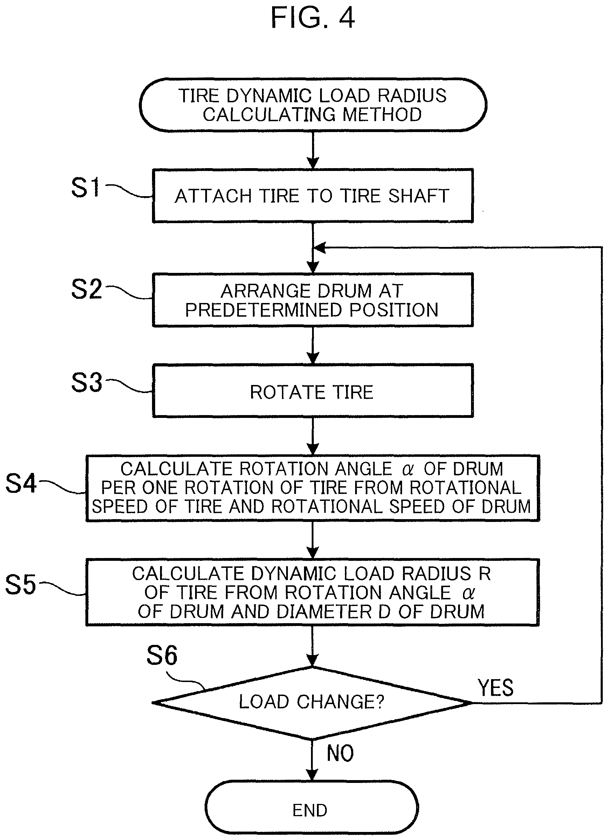

Next, a tire dynamic load radius calculating method according to one embodiment of the present invention will be described with reference to FIG. 4.

First, the tire 2 is attached to the tire shaft 2x (Step S1).

After Step S1, the drum 3 is arranged at a predetermined position (Step S2). Specifically, the movement control unit c3 of the controller 1c controls the drum moving motor 3m on the basis of the signal from the tire load sensor 5s such that a predetermined load (the first value) is applied to the tire 2, and arranges the drum 3 at a predetermined position. This brings about a state where the tread 2a and the outer circumferential surface 3a are in contact with each other and a predetermined load is being applied to the tire 2.

After Step S2, the controller 1c controls the tire rotating motor 2m to cause the tire 2 to rotate at a predetermined rotational speed (Step S3).

After Step S3, the drum rotation angle calculating unit c1 of the controller 1c calculates a rotation angle $\alpha$ of the drum 3 per one rotation of the tire 2 on the basis of the signals from the rotary encoders 2s and 3s (a rotational speed of the tire 2 and a rotational speed of the drum 3) (Step S4: a drum rotation angle calculating step).

After Step S4, the tire dynamic load radius calculating unit c2 of the controller 1c calculates a dynamic load radius R of the tire 2 based on formula (1) below by using the rotation angle $\alpha$ of the drum 3 calculated in Step S4 (Step S5: a tire dynamic load radius calculation step).

$$R = L/2\pi \ ... \ (1)$$

(Here, R represents a dynamic load radius of the tire 2 and L represents a distance traveled by the tire 2 per one rotation of the tire 2.)

Specifically, the tire dynamic load radius calculating unit c2 of the controller 1c conducts calculation by applying a formula (2) below to L in the above formula (1).

$$L = \pi \times D \times \alpha/360 \ ... \ (2)$$

(Here, L represents a distance traveled by the tire 2 per one rotation of the tire 2, D represents a diameter of the drum 3, and $\alpha$ represents a rotation angle (°) of the drum 3 per one rotation of the tire 2).

After Step S5, the load change necessity determining unit c5 of the controller 1c determines whether to change a load to be applied to the tire 2 or not (Step S6). There is a case, for example, where with a plurality of values set as a load to be applied to the tire 2, test conditions are set so as to calculate a dynamic load radius R of the tire 2 at each value.

In a case, for example, where test conditions are set as described above, the load change necessity determining unit c5 of the controller 1c determines that a load to be applied to the tire 2 should be changed (Step S6: YES), the controller 1c returns processing to Step S2, and the movement control unit c3 of the controller 1c controls the drum moving motor 3m on the basis of the signal from the tire load sensor 5s such that a predetermined load (the second value) is applied to the tire 2, and arranges the drum 3 at a predetermined position. Thereafter, the controller 1c executes Steps S3 to S5 in the same manner as described above.

On the other hand, when the load change necessity determining unit c5 of the controller 1c determines that a load to be applied to the tire 2 needs not be changed (Step S6: NO), the controller 1c ends the routine.

As described above, according to the present embodiment, by using a rotation angle $\alpha$ of the drum 3 per one rotation of the tire 2, a dynamic load radius R of the tire 2 is calculated based on the formula (1) to be originally used (see Steps S4 and S5 in FIG. 4). This enables highly precise calculation of a dynamic load radius R of the tire 2.

In a state where the tire shaft 2x and the drum shaft 3x are arranged parallel to each other and the tread 2a and the outer circumferential surface 3a are in contact with each other, the tire rotating motor 2m causes the tire 2 to rotate. In this case, since the same drive force as in actual travelling of a vehicle can be applied to the tire 2, a dynamic load radius R of the tire 2 can be calculated more precisely.

With the drum shaft 3x being supported to be unrotatable and the drum 3 being rotatable with respect to the drum shaft 3x, the tire load sensor 5s is attached to the drum shaft 3x. In this case, the device is configured in accordance with JIS D4233: 2001 ("rotating force can be applied from any of a tire shaft and a drum shaft but is not allowed to pass through a part where a force detection device is provided"). In this configuration, as compared with a case where the tire load sensor 5s is attached to a rotatable member such as the tire shaft 2x, a load to be applied to the tire 2 can be detected more precisely.

Also in the present embodiment, a dynamic load radius R of the tire 2 is calculated at each of the plurality of values related to a load to be applied to the tire 2 (in a case of YES in Step S6 of FIG. 4, Steps S2 to S5 are again executed). Obtaining a dynamic load radius R of the tire 2 at each of the plurality of values related to a load to be applied to the tire 2 by this calculation enables performance evaluation of the tire 2 to be conducted more appropriately.

As described in the foregoing, a tire dynamic load radius calculating device and a tire dynamic load radius calculating method are provided which enable calculation of a tire dynamic load radius with high precision.

A tire dynamic load radius calculating device to be provided includes: a drum shaft; a drum having an outer circumferential surface which simulates a road surface on which a tire travels, and being rotatable around the drum shaft; a tire shaft for supporting the tire; a rotation mechanism configured to cause at least one of the tire and the drum to rotate, with the tire shaft and the drum shaft being arranged in parallel to each other and a tread of the tire and the outer circumferential surface being in contact with each other; a tire rotation sensor for detecting rotation of the tire; a drum rotation sensor for detecting rotation of the drum; a drum rotation angle calculating unit configured to calculate a rotation angle of the drum per one rotation of the tire based on signals from the tire rotation sensor and the drum rotation sensor; and a tire dynamic load radius calculating unit configured to calculate a dynamic load radius of the tire based on a formula (1) below, using the rotation angle of the drum calculated by the drum rotation angle calculating unit.

$$R = L/2\pi \ ... \ (1)$$

(Here, R represents the dynamic load radius of the tire and L represents a distance traveled by the tire per one rotation of the tire.)

In a tire dynamic load radius calculating method to be provided which uses a tire dynamic load radius calculating device including: a drum shaft; a drum having an outer circumferential surface which simulates a road surface on which a tire travels, and being rotatable around the drum shaft; a tire shaft for supporting the tire; a rotation mechanism configured to cause at least one of the tire and the drum to rotate, with the tire shaft and the drum shaft being arranged in parallel to each other and a tread of the tire and the outer circumferential surface being in contact with each other; a tire rotation sensor for detecting rotation of the tire; and a drum rotation sensor for detecting rotation of the drum, there are provided a drum rotation angle calculating step of calculating a rotation angle of the drum per one rotation of the tire based on signals from the tire rotation sensor and the drum rotation sensor; and a tire dynamic load radius calculating step of calculating a dynamic load radius of the tire based on a formula (1) below, using the rotation angle of the drum calculated in the drum rotation angle calculating step.

$$R = L/2\pi \ ... \ (1)$$

(Here, R represents the dynamic load radius of the tire and L represents a distance traveled by the tire per one rotation of the tire.)

According to the above tire dynamic load radius calculating device and tire dynamic load radius calculating method, by using a rotation angle of a drum per one rotation of the tire, a dynamic load radius of a tire can be calculated with high precision based on the formula (1) to be originally used.

The rotation mechanism can be configured to allow the tire to rotate. In this case, since the same drive force as in actual travelling of a vehicle can be applied to the tire, a dynamic load radius of the tire can be calculated more precisely.

The drum is rotatable with respect to the drum shaft, and the calculating device may further include a supporting member which supports the drum shaft while preventing rotation of the drum shaft, and a tire load sensor attached to the drum shaft for detecting a load to be applied to the tire. In this case, the device is configured in accordance with JIS D4233: 2001 ("rotating force can be applied from any of a tire shaft and a drum shaft but is not allowed to pass through a part where a force detection device is provided"). In this configuration, as compared with a case where the tire load sensor is attached to a rotatable member such as a tire shaft, a load to be applied to the tire can be detected more precisely.

The calculating device may further include a movement mechanism for moving at least one of the tire and the drum such that the tire and the drum relatively move in a direction orthogonal to the tire shaft and the drum shaft, a movement control unit configured to control the movement mechanism to adjust the load on the basis of the signal from the tire load sensor, and a storage unit configured to store a plurality of values set in advance related to the load, in which calculating device, the movement control unit controls the movement mechanism such that the load becomes a first value among the plurality of values, and after the tire dynamic load radius calculating unit calculates a dynamic load radius of the tire at the first value, the movement control unit controls the movement mechanism such that the load becomes a second value different from the first value among the plurality of values, and the tire dynamic load radius calculating unit calculates a dynamic load radius of the tire at the second value. In this case, obtaining a dynamic load radius of the tire at each of the plurality of values related to a load to be applied to the tire enables performance evaluation of the tire to be conducted more appropriately.

The drum rotation sensor may be a magnetic rotary encoder.

The drum rotation sensor may be an optical rotary encoder.

The calculating device may be applied to a tire uniformity testing machine which conducts tire uniformity test for testing uniformity in a circumferential direction of the tire.

Although preferred embodiments of the present invention have been described in the foregoing, the present invention is not limited to the above embodiments but allows for various design changes within a range described in the scope of the claims for patent.

Not limited to a tire uniformity testing machine, the present invention may be applied to other tire testing device (balancer etc.). When applying the present invention to a device without a drum (balancer etc.), the present invention can be implemented by providing a separate drum in the device.

The rotation mechanism is not limited to causing a tire to rotate but may cause a drum to rotate.

The movement mechanism is not limited to causing a drum to move but may cause a tire to move (although in the above embodiment, the movement mechanism causes the tire to rotate and the drum to move in a direction orthogonal to the tire shaft and the drum shaft, the movement mechanism may cause the tire to move in the direction orthogonal to the tire shaft and the drum shaft and cause the drum to rotate).

Although in the above embodiment, the drum shaft is supported unrotatably and the drum is rotatable with respect to the drum shaft (i.e., while the drum rotates, the drum shaft will not rotate), the present invention is not limited thereto. For example, the drum can rotate together with the drum shaft.

Not limited to the drum shaft, the tire load sensor can be attached to the tire shaft.

The drum rotation sensor is not limited to a magnetic rotary encoder, an optical rotary encoder, etc. but may be an arbitrary sensor. For example, the drum rotation sensor may be configured with a spur gear attached to the drum shaft, another spur gear meshed with the spur gear, and an encoder attached to a shaft of the other spur gear. This configuration has an advantage that even when foreign matters such as dust are attached to the drum rotation sensor, detecting precision will be hardly affected.

Not limited to calculating a tire dynamic load radius at each of the plurality of values of a load to be applied to the tire, the tire dynamic load radius calculating unit may calculate a tire dynamic load radius at one of values of a load to be applied to the tire.

The above formula (2), which is a formula used in a case where a unit of a rotation angle $\alpha$ of a drum is °, can be appropriately changed according to a unit (radian, minute, second, etc. other than °) of a rotation angle $\alpha$ of the drum.

**Claims**

1. A tire dynamic load radius calculating device comprising:

 a drum shaft;
 a drum having an outer circumferential surface which simulates a road surface on which a tire travels, and being rotatable around the drum shaft;
 a tire shaft for supporting the tire;
 a rotation mechanism configured to cause at least one of the tire and the drum to rotate, with the tire shaft and the drum shaft being arranged in parallel to each other and a tread of the tire and the outer circumferential surface being in contact with each other;
 a tire rotation sensor for detecting rotation of the tire;
 a drum rotation sensor for detecting rotation of the drum;
 a drum rotation angle calculating unit configured to calculate a rotation angle of the drum per one rotation of the tire based on signals from the tire rotation sensor and the drum rotation sensor; and
 a tire dynamic load radius calculating unit configured to calculate a dynamic load radius of the tire based on a formula (1) below, using the rotation angle of the drum calculated by the drum rotation angle calculating unit,

$$R = L/2\pi \ ... \ (1)$$

 (where R represents the dynamic load radius of the tire and L represents a distance traveled by the tire per one rotation of the tire).

2. The tire dynamic load radius calculating device according to claim 1, wherein the rotation mechanism is configured to cause the tire to rotate.

3. The tire dynamic load radius calculating device according to claim 2, wherein
 the drum is rotatable with respect to the drum shaft, and
 the tire dynamic load radius calculating device further comprises:

 a supporting member which supports the drum shaft while preventing rotation of the drum shaft; and
 a tire load sensor attached to the drum shaft for detecting a load to be applied to the tire.

4. The tire dynamic load radius calculating device according to claim 3, further comprising:

 a movement mechanism for moving at least one of the tire and the drum such that the tire and the drum relatively move in a direction orthogonal to the tire shaft and the drum shaft;
 a movement control unit configured to control the movement mechanism to adjust the load based on a signal from the tire load sensor; and
 a storage unit configured to store a plurality of values set in advance related to the load, wherein
 the movement control unit controls the movement mechanism such that the load becomes a first value among the plurality of values, and after the tire dynamic load radius calculating unit calculates a dynamic load radius of the tire at the first value, the movement control unit controls the movement mechanism such that the load becomes a second value different from the first value among the plurality of values, and the tire dynamic load radius calculating unit calculates a dynamic load radius of the tire at the second value.

5. The tire dynamic load radius calculating device according to claim 1, wherein the drum rotation sensor is a magnetic rotary encoder.

6. The tire dynamic load radius calculating device according to claim 1, wherein the drum rotation sensor is an optical rotary encoder.

7. The tire dynamic load radius calculating device according to any one of claims 1 to 6, which is applied to a tire uniformity testing machine which conducts a tire uniformity test for testing uniformity in a circumferential direction of the tire.

8. A tire dynamic load radius calculating method using a tire dynamic load radius calculating device including: a drum shaft; a drum having an outer circumferential surface which simulates a road surface on which a tire travels, and being rotatable around the drum shaft; a tire shaft for supporting the tire; a rotation mechanism configured to cause at least one of the tire and the drum to rotate, with the tire shaft and the drum shaft being arranged in parallel to each other and a tread of the tire and the outer circumferential surface being in contact with each other; a tire rotation sensor for detecting rotation of the tire; and a drum rotation sensor for detecting rotation of the drum, the tire dynamic load radius calculating method comprising:

> a drum rotation angle calculating step of calculating a rotation angle of the drum per one rotation of the tire based on signals from the tire rotation sensor and the drum rotation sensor; and
> a tire dynamic load radius calculating step of calculating a dynamic load radius of the tire based on a formula (1) below, using the rotation angle of the drum calculated in the drum rotation angle calculating step,

$$R = L/2\pi \ ... \ (1)$$

> (where R represents the dynamic load radius of the tire and L represents a distance traveled by the tire per one rotation of the tire).

FIG. 1

# FIG. 2

# FIG. 3

1

1c

CONTROLLER

c1 — DRUM ROTATION ANGLE CALCULATING UNIT

c2 — TIRE DYNAMIC LOAD RADIUS CALCULATING UNIT

c3 — MOVEMENT CONTROL UNIT

c4 — STORAGE UNIT

c5 — LOAD CHANGE NECESSITY DETERMINING UNIT

TIRE ROTATING MOTOR — 2m

DRUM MOVING MOTOR — 3m

ROTARY ENCODER — 2s

ROTARY ENCODER — 3s

TIRE LOAD SENSOR — 5s

# FIG. 4

```
┌────────────────────────────────────┐
│    TIRE DYNAMIC LOAD RADIUS        │
│      CALCULATING METHOD            │
└────────────────────────────────────┘
                │
                ▼
S1  ┌────────────────────────────────────┐
    │     ATTACH TIRE TO TIRE SHAFT      │
    └────────────────────────────────────┘
                │
                ▼
S2  ┌────────────────────────────────────┐
    │        ARRANGE DRUM AT             │
    │    PREDETERMINED POSITION          │
    └────────────────────────────────────┘
                │
                ▼
S3  ┌────────────────────────────────────┐
    │           ROTATE TIRE              │
    └────────────────────────────────────┘
                │
                ▼
S4  ┌────────────────────────────────────┐
    │ CALCULATE ROTATION ANGLE α OF DRUM │
    │  PER ONE ROTATION OF TIRE FROM     │
    │  ROTATIONAL SPEED OF TIRE AND      │
    │  ROTATIONAL SPEED OF DRUM          │
    └────────────────────────────────────┘
                │
                ▼
S5  ┌────────────────────────────────────┐
    │  CALCULATE DYNAMIC LOAD RADIUS R   │
    │   OF TIRE FROM ROTATION ANGLE α    │
    │  OF DRUM AND DIAMETER D OF DRUM    │
    └────────────────────────────────────┘
                │
                ▼
S6       ◇ LOAD CHANGE? ◇ ──YES──┐
                │
                │ NO
                ▼
        ┌──────────────┐
        │     END      │
        └──────────────┘
```

11

**EP 3 637 084 A1**

<table>
<tr><td colspan="2" align="center">INTERNATIONAL SEARCH REPORT</td><td>International application No.<br>PCT/JP2018/022189</td></tr>
</table>

**A. CLASSIFICATION OF SUBJECT MATTER**
Int.Cl. G01M17/02(2006.01)i, B60C19/00(2006.01)i, G01M1/16(2006.01)i

According to International Patent Classification (IPC) or to both national classification and IPC

**B. FIELDS SEARCHED**

Minimum documentation searched (classification system followed by classification symbols)
Int.Cl. G01M1/00-1/38; 17/02, B60C19/00

Documentation searched other than minimum documentation to the extent that such documents are included in the fields searched
Published examined utility model applications of Japan        1922-1996
Published unexamined utility model applications of Japan      1971-2018
Registered utility model specifications of Japan              1996-2018
Published registered utility model applications of Japan      1994-2018

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2017-026468 A (SUMITOMO RUBBER INDUSTRIES, LTD.) 02 February 2017, paragraphs [0003]-[0005], [0018]-[0023], [0026]-[0041], fig. 1<br>(Family: none) | 1-6, 8<br>7 |
| Y<br>A | JP 05-034233 A (KOBE STEEL, LTD.) 09 February 1993, paragraphs [0002], [0007]-[0014], fig. 1, 2<br>(Family: none) | 7<br>1-6, 8 |
| A | WO 2015/083780 A1 (YOKOHAMA RUBBER CO., LTD.) 11 June 2015, paragraph [0009]<br>& DE 112014005516 T5 & CN 105745088 A | 1-8 |

☒ Further documents are listed in the continuation of Box C.      ☐ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>20.07.2018 | Date of mailing of the international search report<br>07.08.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

12

**INTERNATIONAL SEARCH REPORT**

| International application No. |
| --- |
| PCT/JP2018/022189 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 56-163903 A (SUMITOMO RUBBER INDUSTRIES, LTD.) 16 December 1981, page 2, upper left column, lines 8-17, fig. 5 (Family: none) | 1-8 |
| A | JP 2012-052926 A (YOKOHAMA RUBBER CO., LTD.) 15 March 2012, claims 1-3, paragraphs [0037], [0038], fig. 6-8 & US 2012/0048006 A1, paragraphs [0039], [0040], claims 1-3, fig. 6-8 & EP 2426475 A1 & CN 102435450 A & KR 10-2012-0024442 A & TW 201229482 A | 1-8 |
| A | US 5448910 A (YURJEVICH, M. A.) 12 September 1995, entire text, all drawings & JP 7-260638 A & EP 671621 A2 & DE 69502042 T2 & ES 2115280 T3 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05034233 A